# EUROPÄISCHE PATENTSCHRIFT

(11) **EP 3 159 487 B1**
(45) Veröffentlichungstag und Bekanntmachung des Hinweises auf die Patenterteilung: **20.01.2021**
(21) Anmeldenummer: 16158540.1
(22) Anmeldetag: 03.03.2016
(51) Int. Cl.: F01D 11/00, F01D 9/02

(54) **STATOR EINER TURBINE EINER GASTURBINE MIT VERBESSERTER KÜHLLUFTFÜHRUNG**
STATOR OF A TURBINE OF A GAS TURBINE WITH IMPROVED COOLING AIR CONDUCTION
STATOR D'UNE TURBINE À GAZ AYANT UN GUIDAGE D'AIR DE REFROIDISSEMENT AMÉLIORÉ

(30) Priorität: 04.03.2015 DE 102015203872
(43) Veröffentlichungstag der Anmeldung: 26.04.2017
(73) Patentinhaber: Rolls-Royce Deutschland Ltd & Co KG, 15827 Blankenfelde-Mahlow (DE)
(72) Erfinder: WEINERT, Markus, 15827 Blankenfelde-Mahlow (DE); LEYMANN, Tobias, 15827 Blankenfelde-Mahlow (DE)
(74) Vertreter: Hoefer & Partner Patentanwälte mbB

(56) Entgegenhaltungen:
- EP-A1- 0 902 167
- EP-A2- 1 033 477
- WO-A1-2007/063128
- WO-A1-2008/122507
- GB-A- 2 280 935

## Beschreibung

Die Erfindung bezieht sich auf einen Stator einer Hochdruckturbine und/oder einer Mitteldruckturbine und/oder einer Niederdruckturbine einer Fluggasturbine oder einer stationären Industriegasturbine gemäß den Merkmalen des Oberbegriffs des Anspruches 1.

Im Einzelnen bezieht sich die Erfindung auf die Ausgestaltung von inneren und/oder äußeren Schaufelplattformen, an denen jeweils eine oder mehrere Statorschaufeln ausgebildet sind. Zwischen den Schaufelplattformen ist eine Kühlluftkammer vorgesehen, um Kühlluft zwischen benachbarten Schaufelplattformen durchzuführen.

Zur Kühlung von Schaufelplattformen von Statorschaufeln zeigt der Stand der Technik eine mögliche Lösungsvariante mittels Filmkühlungsbohrungen. Nachteilig daran sind die aufwendige Fertigung sowie die Gefahr des Auftretens von Verstopfungen der Löcher durch Fremdpartikel und eine unter bestimmten Aspekten auftretende ungleichmäßige Verteilung des Kühlluftfilms und/oder mangelhafter Ausbildung eines Kühlluftfilms aufgrund fertigungstechnischer Limitationen. Unter Umständen ist auch die Zugänglichkeit für Werkzeuge zur Herstellung der erwähnten Filmkühlungsbohrungen limitiert.

Aus der US 5 531 457 A ist es bekannt, zwischen benachbarten Statorschaufelplattformen einen Spalt vorzusehen, durch welchen Kühlluft ausströmen kann. Die Breite dieses Spaltes ändert sich in Abhängigkeit von den thermischen Bedingungen, sodass der Spalt bei thermischer Ausdehnung zunehmend geschlossen wird. Der Austritt der Kühlluft aus diesem Spalt ermöglicht nicht, die Kühlluft gezielt auf die Oberfläche der Schaufelplattform zu leiten.

Die WO 2007 / 063 128 A1 zeigt in ähnlicher Konstruktion lediglich einen Spalt zwischen benachbarten Rotorschaufelplattformen, welcher sich bei thermischer Ausdehnung der Schaufelplattformen zunehmend schließt und dann ein Ausströmen von Kühlluft nur noch bedingt zulässt oder gänzlich verhindert. Somit ist ein Ausströmen von Kühlluft weiterhin vom Zwischenplattformspalt abhängig.

Eine weitere Konstruktion zeigt die US 2009 / 0 263 235 A1. Auch hierbei ist zwischen den benachbarten Rotorschaufelplattformen ein Spalt vorgesehen, welcher sich bei thermischer Ausdehnung der Schaufelplattformen ebenfalls schließt. Der Spalt ist in einem Winkel zur Oberfläche der Schaufelplattformen angeordnet. Aus der GB 2 280 935 A ist ein Stator einer Turbine gemäß dem Oberbegriff des Anspruchs 1 bekannt. Ferner zeigt die EP 1 033 477 A2 einen Stator einer Turbine mit einer Plattform, welche an einem Ausströmbereich eine Kerbe aufweist.

Der Erfindung liegt die Aufgabe zugrunde, einen Stator der eingangs genannten Art zu schaffen, welcher bei einfachem Aufbau und einfacher, kostengünstiger Herstellbarkeit eine effizientere Reduzierung der Oberflächenmetalltemperatur der inneren oder äußeren Schaufelplattform ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Die Erfindung beschreibt somit einen Stator einer Turbine einer Gasturbine, mit einem Strömungskanal, in welchem Leitschaufeln angeordnet sind, welche jeweils eine äußere und eine innere Schaufelplattform aufweisen, sowie mit jeweils einer durch benachbarte Schaufelplattformen gebildeten Kühlluftkammer oder einem Kühlluftplenum zur Durchführung von Kühlluft, wobei die sich ergebende Kühlluftkammer und/oder ein Plattformzwischenspalt so ausgebildet sind, dass, ausgehend von einer der benachbarten Schaufelplattform zugewandten Seite der Schaufelplattform, zumindest eine zu einer Plattformoberseite offene, mit der Kühlluftkammer in Verbindung stehende Ausströmtasche ausgebildet ist und wobei in der Wandung der Kühlluftkammer zumindest eine radial nach innen zur Kühlluftkammer geöffnete Kühllufttasche ausgebildet ist, welche sich zu dem Plattformzwischenspalt öffnet.

Erfindungsgemäß ist somit vorgesehen, die Kühlluft durch die Ausströmtasche zu leiten und auf diese Weise einen Austritt der Kühlluft und insbesondere eine Filmbildung der Kühlluft auf der Plattformoberseite vorzusehen.

Erfindungsgemäß ist somit vorgesehen, an der Oberfläche der jeweiligen Schaufelplattform eine Ausströmtasche vorzusehen. Diese ist somit radial außen an der Oberfläche oder Oberseite der Schaufelplattform angeordnet und erstreckt sich sowohl in axialer Richtung als auch in Umfangsrichtung. Die Tiefe der Ausströmtasche ist in radialer Richtung vorgesehen. Es ergibt sich somit eine für die Ausströmung der Kühlluft vorgesehene Ausströmtasche, welche sich in allen drei Dimensionen erstreckt und zur Strömungsoptimierung ausgeformt ist. Im Gegensatz zum Stand der Technik, bei welchem nur einfache Schlitze oder Nuten zwischen den Schaufelplattformen vorgesehen sind, ermöglicht die erfindungsgemäße Ausströmtasche somit auch bei einem Schließen des Plattformzwischenspalts durch thermische Ausdehnungen eine direkte und gezielte Filmkühlung der Plattformoberseite. Während beim Stand der Technik die Schlitze oder Nuten zwischen den Schaufelplattformen eine mehrfache Umlenkung der Strömung der Kühlluft erforderlich machen, wird erfindungsgemäß die Möglichkeit geschaffen, in jedem Betriebspunkt eine störungsfreie Ausströmung der Kühlluft ohne Umlenkung zu realisieren.

Weiterhin ist bei der Erfindung in der Wandung der Kühlluftkammer eine radial nach innen zur Kühlluftkammer geöffnete Kühllufttasche ausgebildet, welche sich zum Plattformzwischenspalt öffnet. Durch diese zusätzliche Kühllufttasche erfolgt die Einleitung der Kühlluft in die Ausströmtasche(n) in optimaler Weise.

Durch die erfindungsgemäße Ausgestaltung ist es möglich, die Oberflächenmetalltemperatur an der Plattform weiter gegenüber der Kühlung gemäß dem Stand der Technik zu reduzieren oder die Kühlluftverteilung zu Verbessern.

Erfindungsgemäß wird der Gesamtströmungskanal der Kühlluft mit Hilfe der benachbarten Schaufelplattformen, deren Kühllufttaschen und Ausströmtaschen, sowie der Zwischenelemente / Dichtstreifen gebildet. Erfindungsgemäß kann somit auf aufwendig herstellbare interne und/oder geschlossene Kühlluftkanäle (Filmkühlungsbohrungen) verzichtet werden.

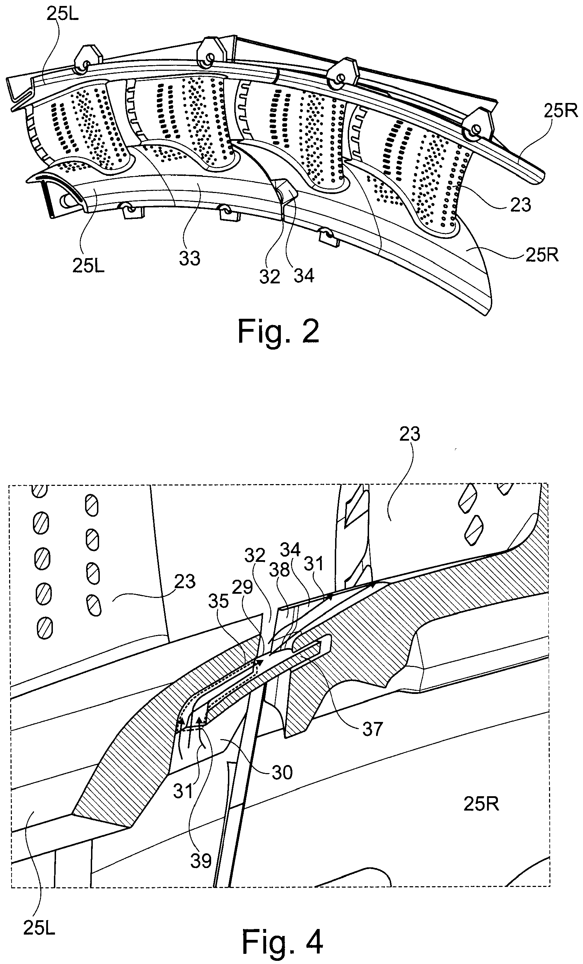

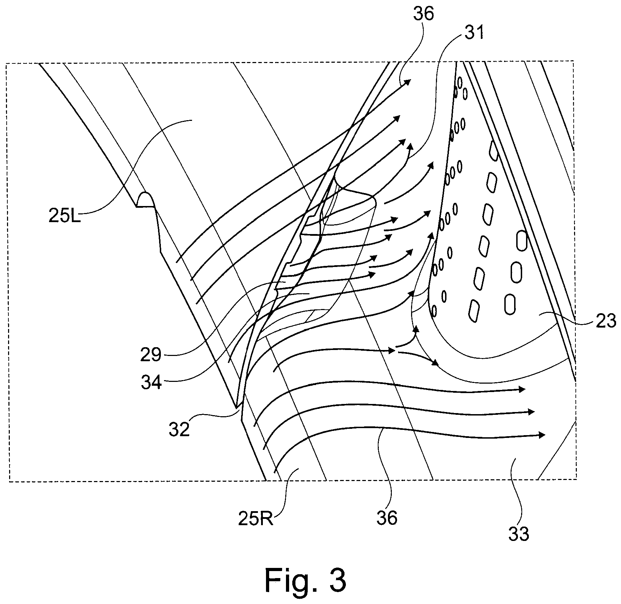

Die Kühllufttasche kann erfindungsgemäß konvergent oder divergent ausgebildet sein. Besonders günstig ist es weiterhin, wenn die Ausströmtasche mit einem möglichst flachen Winkel, idealerweise in einem Winkel zwischen 0° und 35°, zur Plattformoberseite geöffnet oder angeordnet ist. Alternativ kann die Ausströmtasche auch als Freiformfläche strömungsgerecht ausgebildet werden, wobei diese Ausgestaltung bevorzugt in beiden Ebenen vorgesehen ist. Diese Maßnahmen verbessern die Anlage eines Kühlluftfilms auf die Oberfläche der Schaufelplattform. Zur Verbesserung der Strömung trägt auch bei, wenn die Ausströmtasche und/oder die Kühllufttasche jeweils mit freiausgeformten Flächen und/oder Wandungen versehen sind. Insbesondere eine divergente Form der Kühllufttasche (ähnlich einem Diffusor) ermöglicht zum einen eine Geschwindigkeitsabsenkung sowie zum anderen eine Druckerhöhung des Kühlluftmassenstroms, welche zu einer verbesserten Ausprägung des Films führen. Im Radialschnitt sowie in der Draufsicht (vgl. Figur 3 und 4) betrachtet ist die Ausströmtasche derartig profiliert, dass sie sowohl der Krümmung der Schaufelpattformoberseite als auch der Hauptströmung (Heißgas) tangential angenähert ist. Bei der erfindungsgemäßen Ausgestaltung ergeben sich nur geringe Druckverluste der Kühlluftströmung, da diese nicht oder nur sehr geringfügig umgelenkt werden muss. Im Gegensatz hierzu zeigen die Konstruktionen des Standes der Technik die Notwendigkeit, die Kühlluftströmung mehrfach umzulenken, insbesondere um die austretende Kühlluftströmung auf die Oberfläche der Schaufelplattform aufzulegen und/oder ein Dichtelement zu umströmen. Dies resultiert auch in einer höheren Gefahr einer Blockage durch Verschmutzung. Dieses Risiko wird erfindungsgemäß weitestgehend minimiert.

Weiterhin kann vorgesehen sein, dass die beschriebene Ausführung der Ausströmtasche und/oder der Kühllufttasche in ähnlicher Form an der äußeren Heißgasplattformoberfläche (Schaufelspitze) ausgebildet ist. Die Ausströmtasche kann auch eine weitere Durchströmausnehmung in integraler Ausführung in vorwiegend radialer Orientierung aufweisen.

Nachfolgend wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine perspektivische Teilansicht von erfindungsgemäßen Statorschaufeln mit zugehörigen Schaufelplattformen,
- Fig. 3: eine vergrößerte perspektivische Teilansicht einer Ausströmtasche, und
- Fig. 4: eine Schnittansicht, analog Fig. 3.

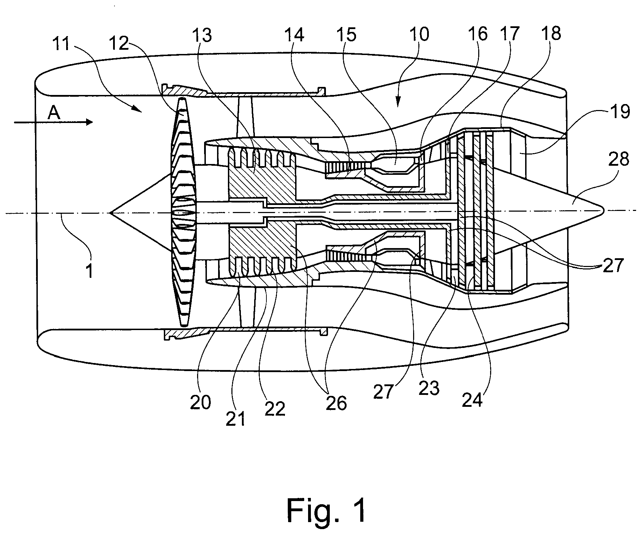

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die in der Regel radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1. Ein Auslasskonus ist mit 28 bezeichnet.

Die Fig. 2 zeigt eine perspektivische Teilansicht eines erfindungsgemäßen Stators mit Leitschaufeln 23, welche mit äußeren und inneren Schaufelplattformen 25 verbunden sind. Zwischen den Schaufelplattformen 25 ist ein Plattformzwischenspalt 32 gezeigt. In der Darstellung der Fig. 2 bis 4 wird jeweils die linke Schaufelplattform mit 25L und die rechte Schaufelplattform mit 25R bezeichnet. Die Schaufelplattformen 25 erstrecken sich, wie bei einem Stator einer Turbine üblich, ringförmig in Umfangsrichtung. Die vielfachen Ausnehmungen der Schaufelplattform sind Kühlluftausnehmungen gemäß dem Stand der Technik.

In der nachfolgenden Beschreibung wird zur Vereinfachung der Darstellung auf die radial innere (bezogen auf die Triebwerksachse 1) Schaufelplattform Bezug genommen, die Erfindung kann in analoger Weise auch an der äußeren Schaufelplattform vorgesehen sein.

Die Fig. 2 zeigt eine Ausströmtasche 34, durch welche Kühlluft 31 austritt und zu einer Plattformoberseite 33 geleitet wird. Die Kühlluft 31 strömt aus Ausströmöffnungen 29 aus, so wie dies in Fig. 3 dargestellt ist. Die austretende Kühlluft 31 folgt dem Profil der Ausströmtasche 34, der Plattformoberseite 33 sowie dem Profil der Leitschaufel 23 und schafft einen Kühlfilm auf der Oberfläche der Plattformoberseite 33. In Fig. 3 ist die Strömung des Heißgases mit dem Bezugszeichen 36 dargestellt.

Wie sich insbesondere aus der Darstellung der Fig. 2 ergibt, ist die Ausströmtasche 34 dreidimensional als Freiformfläche in die Oberfläche der Schaufelplattform eingearbeitet, damit die Kühlluft wirksam als Kühlluftfilm auf die Oberfläche der Schaufelplattform aufgelegt werden kann. Die Zuführung der Kühlluft erfolgt dabei, wie nachfolgend beschrieben, nicht wie beim Stand der Technik durch den Plattformzwischenspalt, sondern vielmehr durch die Ausströmtasche. Deshalb besteht erfindungsgemäß auch nicht die Gefahr, dass bei einem Schließen des Plattformzwischenspaltes durch thermische Ausdehnung der Schaufelplattformen die Kühlluftversorgung reduziert oder gänzlich unterbrochen wird.

Die Fig. 4 zeigt eine Schnittansicht des Ausführungsbeispiels gemäß den Fig. 2 und 3. Dabei ist insbesondere ersichtlich, dass die Kühlluft 31, welche durch die Ausströmöffnungen 29 ausströmt, durch eine Kühllufttasche 35 geleitet wird. In diese strömt die Kühlluft 31 aus einer Kühlluftkammer 30.

Die Fig. 4 zeigt weiterhin ein Zwischenelement / Dichtstreifen 37, welches als Dichtung des Plattformzwischenspaltes dient und erfindungsgemäß zusammen mit der Kühllufttasche 35 einen Kühlluftkanal 39 bildet, welcher den Kühlluftmassenstrom bestimmt bzw. die Kühlluft leitet.

Zur Ausbildung der Kühllufttasche 35 muss die Wandstärke der Schaufelplattform nur lokal verringert werden. Die Form der Kühllufttaschen 35 (Kühlungskanäle) kann unterschiedlich ausgebildet werden, beispielsweise mit einem rechteckigen Querschnitt, einem ovalen Querschnitt, eckig oder abgerundet. Weiterhin ist es möglich, den Winkel zwischen der Kühllufttasche 35 und der Plattformoberseite 33 zu variieren, um optimale Strömungs- und Massenstromverhältnisse für den jeweiligen Anwendungsfall zu erzeugen.

So ist es erfindungsgemäß vorgesehen, die Kühllufttaschen 35 zur Verbesserung der Strömungspfade und zur Beeinflussung von Temperatur und Druck konvergent oder divergent auszugestalten oder abgerundete Formen zu verwenden, im Gegensatz zu den herkömmlich verwendeten Filmkühlungsbohrungen. Eine divergente Form, welche abgerundet ausgebildet ist, erweist sich als besonders vorteilhaft, um die Geschwindigkeit und den dynamischen Druck der Kühlluftströmung zu verringern und dadurch den statischen Druck zu erhöhen und die Temperatur zu verringern. Weiterhin ergibt sich eine gleichmäßigere Verteilung der Kühlluft über die axiale Länge der Plattform, siehe hierzu auch Fig. 3.

Erfindungsgemäß kann abhängig von den Kühlungsanforderungen die Anzahl und die Lage der Kühllufttaschen über die gesamte axiale Länge der Schaufelplattform variiert werden.

Die Fig. 3 zeigt weiterhin, dass in der benachbarten Schaufelplattform (rechte Schaufelplattform gemäß Fig. 3) eine Ausströmtasche 34 ausgebildet ist, in deren Einströmöffnung 38 die aus der Ausströmöffnung 29 der Kühllufttasche 35 ausströmende Kühlluft eintritt. Diese wird in einem flachen Winkel zur Oberfläche bzw. Plattformoberseite 33 geleitet, so dass sich sowohl günstige Strömungsverhältnisse als auch optimierte Temperatur- und Druckverhältnisse ergeben. Die Ausströmtasche 34 sorgt für einen direkten und ungehinderten Kühlluftfluss zwischen dem Eintritt der Kavität unter der inneren Schaufelplattform (Kühlluftkammer 30 oder Kühlluftplenum) und dem Austritt aus der konvexen Plattformoberseite 33. Wie in Fig. 3 gezeigt, kann sich der Kühlluftfilm mit Hilfe der Ausströmtasche 34 besser auf der Plattformoberseite 33 ausbreiten und wird weniger stark abgelöst. Insbesondere diese Merkmale sorgen für eine Steigerung der Kühlungseffektivität. Die Form der Ausströmtasche 34 kann den Anforderungen gemäß angepasst werden, sie ist bevorzugt jedoch möglichst flach ansteigend und stark ausgerundet ausgestaltet, um ein Ablösen des Kühlluftfilms sowie Ablösungskanten und somit Verwirbelungen und Verluste zu vermeiden.

Ein weiterer Vorteil der Ausströmtasche 34 besteht darin, dass toleranzbedingte radiale Stufen zwischen benachbarten Schaufelplattformen 25 reduziert werden können, um zu vermeiden, dass die Hauptströmung über eine Kante ablöst und so zusätzliche Strömungsverluste und eine damit verbundene Verringerung des Turbinenwirkungsgrades verursacht.

Die Ausgestaltung der Ausströmtasche 34 kann in Form, Geometrie, Winkel, Anzahl, Länge und Lage variiert werden, um den Kühlungsanforderungen gerecht zu werden. Beispielsweise ist es erfindungsgemäß möglich, die Ausströmtasche 34 über die gesamte axiale Länge der Schaufelplattform 25 auszuführen. Somit werden zum einen die Verluste aufgrund der toleranzbedingten radiale Stufen zwischen benachbarten Schaufelplattformen 25 reduziert und zum anderen auch der hintere Teil der Schaufelplattform 25 effektiv gekühlt.

Erfindungsgemäß kann außerdem eine zweite Ausströmtasche vorgesehen werden, welche dafür sorgt, dass auch bei geschlossenem Plattformzwischenspalt 32 zwischen benachbarten Schaufelplattformen ein ausreichender Kühlluftmassenstrom strömen kann.

Erfindungsgemäß ergeben sich somit die folgenden Vorteile:
Erfindungsgemäß kann eine großflächigere Kühlung als mittels herkömmlicher Filmkühlungsbohrungen bei geringerem Fertigungsaufwand realisiert werden.

Die erfindungsgemäße Ausgestaltung ist mit existierenden Herstellungsmethoden zu fertigen, sie kann beispielsweise beim Guss der Schaufelplattformen kostengünstig realisiert werden.

Die erfindungsgemäße Lösung ist weiterhin weniger anfällig für Verschmutzungen und Blockaden durch Fremdkörper. Das Verhältnis zwischen Breite und Höhe der Kühllufttasche kann ohne negative Beeinflussung der radialen Position geändert werden, um eine Reduzierung der Anfälligkeit für Blockaden zu erreichen.

Es ergibt sich eine höhere Flexibilität bezüglich der Geometrie der Kühlungskanäle, im Vergleich zu konventionellen Filmbohrungen, insbesondere der Kühllufttasche 35 und der Ausströmtasche 34. Dies ist insbesondere bei einer integralen Ausführung vorteilhaft. Es ergibt sich insgesamt eine gezielte Optimierung der Plattformkühlung.

Durch die Erfindung ist eine Verringerung der Strömungsverluste bei toleranzbedingten Stufen zwischen benachbarten Schaufelplattformen sichergestellt.

Die Erfindung ist sowohl bei Fluggasturbinen als auch bei stationären Industriegasturbinen oder ganz allgemein bei Gasturbinen oder Turbomaschinen anwendbar.

### Bezuqszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: Schaufelplattform
- 26: Kompressortrommel oder -scheibe
- 27: Turbinenrotornabe
- 28: Auslasskonus
- 29: Ausströmöffnung
- 30: Kühlluftkammer
- 31: Kühlluft
- 32: Plattformzwischenspalt
- 33: Plattformoberseite
- 34: Ausströmtasche
- 35: Kühllufttasche
- 36: Heißgas
- 37: Zwischenelement / Dichtstreifen
- 38: Einströmöffnung
- 39: Kühlluftkanal

## Patentansprüche

1. Stator einer Turbine einer Gasturbine, mit einem Strömungskanal, in welchem Leitschaufeln (23) angeordnet sind, welche jeweils eine äußere und eine innere Schaufelplattform (25) aufweisen, sowie mit jeweils einer durch benachbarte Schaufelplattformen (25) gebildeten Kühlluftkammer (30) zur Durchführung von Kühlluft, **dadurch gekennzeichnet, dass** die sich ergebende Kühlluftkammer (30) und/oder ein Plattformzwischenspalt (32) so ausgebildet sind, dass, ausgehend von einer der benachbarten Schaufelplattform (25) zugewandten Seite der Schaufelplattform (25), zumindest eine zu einer Plattformoberseite (33) offene, mit der Kühlluftkammer (30) in Verbindung stehende Ausströmtasche (34) ausgebildet ist und dass in der Wandung der Kühlluftkammer (30) zumindest eine radial nach innen zur Kühlluftkammer (30) geöffnete, durch ein Zwischenelement oder einen Dichtstreifen 37 begrenzte Kühllufttasche (35) ausgebildet ist, welche sich zu dem Plattformzwischenspalt (32) öffnet.

2. Stator nach Anspruch 1, **dadurch gekennzeichnet, dass** nur eine Kühllufttasche (35) auf einer Schaufelplattform (25) angeordnet ist.

3. Stator nach Anspruch 1 und/oder 2, **dadurch gekennzeichnet, dass** die Kühllufttasche (35) konvergent oder divergent ausgebildet ist.

4. Stator nach einem oder mehreren der Ansprüche 1 bis 3, **dadurch gekennzeichnet, dass** die Ausströmtasche (34) in einem flachen Winkel oder tangential zur Plattformoberseite (33) ausgebildet ist.

5. Stator nach einem oder mehreren der Ansprüche 1 bis 4, **dadurch gekennzeichnet, dass** die Ausströmtasche (34) mit frei ineinander übergehenden Flächen ausgebildet ist.

6. Stator nach einem oder mehreren der Ansprüche 1 bis 5, **dadurch gekennzeichnet, dass** die Wandungen der Kühllufttasche (35) frei ineinander übergehend ausgebildet sind.

7. Stator nach einem oder mehreren der Ansprüche 1 bis 6, **dadurch gekennzeichnet, dass** die Ausströmtasche (34) eine weitere Durchströmausnehmung in integraler Ausführung in vorwiegend radialer Orientierung aufweist.

8. Stator nach einem oder mehreren der Ansprüche 1 bis 7, **dadurch gekennzeichnet, dass** über die axiale Länge der Schaufelplattform (25) mehrere Ausströmtaschen (34) oder eine die gesamte Länge einnehmende Ausströmtasche angeordnet sind.

9. Stator nach einem oder mehreren der Ansprüche 1 bis 8, **dadurch gekennzeichnet, dass** über die axiale Länge der Schaufelplattform (25) mehrere Kühllufttaschen (35) angeordnet sind.

10. Stator nach Anspruch 9, **dadurch gekennzeichnet, dass** die mehreren Kühllufttaschen (35) ganz oder teilweise ineinander übergehend ausgebildet sind.

11. Stator nach einem oder mehreren der Ansprüche 1 bis 10, **dadurch kennzeichnet, dass** die Ausströmtasche (34) und/oder die Kühllufttasche (35) an einer radial äußeren Heißgasplattformoberfläche ausgebildet ist.

## Claims

1. Stator of a turbine of a gas turbine, having a flow channel in which there are arranged guide vanes (23), which each have an outer and an inner vane platform (25), and having in each case a cooling-air chamber (30) which is formed by adjacent vane platforms (25) and serves for the passage of cooling air, **characterized in that** the resulting cooling-air chamber (30) and/or a platform intermediate gap (32) are/is formed in such a way that, proceeding from a side of the vane platform (25), which side faces the adjacent vane platform (25), there is formed at least one outflow pocket (34) which is open towards a platform top side (33) and which is connected to the cooling-air chamber (30), and **in that**, in the wall of the cooling-air chamber (30), there is formed at least one cooling-air pocket (35) which is open radially inwardly towards the cooling-air chamber (30) and which is delimited by an intermediate element or a sealing strip (37) and which opens towards the platform intermediate gap (32).

2. Stator according to Claim 1, **characterized in that** only one cooling-air pocket (35) is arranged at a vane platform (25).

3. Stator according to Claim 1 and/or 2, **characterized in that** the cooling-air pocket (35) is of convergent or divergent form.

4. Stator according to one or more of Claims 1 to 3, **characterized in that** the outflow pocket (34) is formed at a shallow angle or tangentially with respect to the platform top side (33).

5. Stator according to one or more of Claims 1 to 4, **characterized in that** the outflow pocket (34) is formed with surfaces which merge freely into one another.

6. Stator according to one or more of Claims 1 to 5, **characterized in that** the walls of the cooling-air pocket (35) are formed so as to merge freely into one another.

7. Stator according to one or more of Claims 1 to 6, **characterized in that** the outflow pocket (34) has a further throughflow cutout formed in an integral manner with a predominantly radial orientation.

8. Stator according to one or more of Claims 1 to 7, **characterized in that**, over the axial length of the vane platform (25), there are arranged multiple outflow pockets (34) or there is arranged an outflow pocket taking up the entire length.

9. Stator according to one or more of Claims 1 to 8, **characterized in that** multiple cooling-air pockets (35) are arranged over the axial length of the vane platform (25).

10. Stator according to Claim 9, **characterized in that** the multiple cooling-air pockets (35) are formed so as to completely or partially merge into one another.

11. Stator according to one or more of Claims 1 to 10, **characterized in that** the outflow pocket (34) and/or the cooling-air pocket (35) are/is formed at a radially outer hot-gas platform surface.

## Revendications

1. Stator de turbine d'une turbine à gaz, comprenant un canal d'écoulement dans lequel sont disposées des aubes directrices (23), qui présentent chacune une plate-forme d'aube extérieure et une plate-forme d'aube intérieure (25), et comprenant une chambre d'air de refroidissement respective (30) formée par des plates-formes d'aubes adjacentes (25) pour guider l'air de refroidissement, **caractérisé en ce que** la chambre d'air de refroidissement résultante (30) et/ou un interstice entre les plates-formes (32) sont réalisés de telle sorte qu'à partir d'un côté de la plate-forme d'aube (25) tourné vers la plate-forme d'aube adjacente (25), au moins une cavité de sortie d'écoulement (34) ouverte vers un côté supérieur de plate-forme (33), en liaison avec la chambre d'air de refroidissement (30), soit réalisée et que dans la paroi de la chambre d'air de refroidissement (30), au moins une cavité d'air de refroidissement (35) ouverte radialement vers l'intérieur vers la chambre d'air de refroidissement (30), limitée par un élément intermédiaire ou une bande d'étanchéité (37), soit réalisée, laquelle s'ouvre vers l'interstice entre les plates-formes (32).

2. Stator selon la revendication 1, **caractérisé en ce que** seulement une cavité d'air de refroidissement (35) est disposée sur une plate-forme d'aube (25).

3. Stator selon la revendication 1 et/ou 2, **caractérisé en ce que** la cavité d'air de refroidissement (35) est réalisée de manière convergente ou divergente.

4. Stator selon l'une quelconque ou plusieurs des revendications 1 à 3, **caractérisé en ce que** la cavité de sortie d'écoulement (34) est réalisée suivant un angle plat ou tangentiellement au côté supérieur de la plate-forme (33).

5. Stator selon l'une quelconque ou plusieurs des revendications 1 à 4, **caractérisé en ce que** la cavité de sortie d'écoulement (34) est réalisée avec des surfaces se prolongeant librement les unes dans les autres.

6. Stator selon l'une quelconque ou plusieurs des revendications 1 à 5, **caractérisé en ce que** les parois de la cavité d'air de refroidissement (35) sont réalisées de manière à se prolonger librement les unes dans les autres.

7. Stator selon l'une quelconque ou plusieurs des revendications 1 à 6, **caractérisé en ce que** la cavité de sortie d'écoulement (34) présente un évidement de passage d'écoulement supplémentaire réalisé de manière intégrée principalement suivant une orientation radiale.

8. Stator selon l'une quelconque ou plusieurs des revendications 1 à 7, **caractérisé en ce que** sur la longueur axiale de la plate-forme d'aube (25) sont disposées plusieurs cavités de sortie d'écoulement (34) ou une cavité de sortie d'écoulement occupant toute la longueur.

9. Stator selon l'une quelconque ou plusieurs des revendications 1 à 8, **caractérisé en ce que** sur la longueur axiale de la plate-forme d'aube (25) sont disposées plusieurs cavités d'air de refroidissement (35).

10. Stator selon la revendication 9, **caractérisé en ce que** la pluralité de cavités d'air de refroidissement (35) sont réalisées complètement ou partiellement de manière à se prolonger les unes dans les autres.

11. Stator selon l'une quelconque ou plusieurs des revendications 1 à 10, **caractérisé en ce que** la cavité de sortie d'écoulement (34) et/ou la cavité d'air de refroidissement (35) sont réalisées au niveau d'une surface de plate-forme de gaz chaud radialement extérieure.
